# EUROPEAN PATENT SPECIFICATION

(11) **EP 1 370 154 B1**
(45) Date of publication and mention of the grant of the patent: **09.01.2008**
(21) Application number: 02722017.7
(22) Date of filing: 25.03.2002
(51) Int. Cl.: A23G 4/08, C08G 63/08, C08G 63/02

(54) **DEGRADABLE ELASTOMERS FOR CHEWING GUM BASE**
ABBAUBARES ELASTOMER FÜR KAUGUMMIBASIS
ELASTOMERES DEGRADABLES POUR BASE DE GOMME A MACHER

(30) Priority: 23.03.2001 DK 200100494; 06.07.2001 US 303098 P
(43) Date of publication of application: 17.12.2003
(73) Proprietor: Gumlink A/S, 7100 Vejle (DK)
(72) Inventor: WITTORFF, Helle, DK-7120 Vejle (DK); ANDERSEN, Lone, DK-5500 Middelfart (DK); ISAKSEN, Anette, DK-6000 Kolding (DK); STOREY, Robson, Hattiesburg, MS 39402 (US)
(74) Representative: Olesen, Kaj
(86) International application number: PCT/DK2002/000203
(87) International publication number: WO 2002/076230

(56) References cited:
- EP-A- 0 500 098
- EP-A- 0 558 965
- WO-A-00/19837
- WO-A-01/47368
- WO-A-94/11441
- US-A- 5 530 074
- US-A- 5 610 266
- US-A- 5 672 367
- US-A- 6 153 231
- US-B1- 6 190 773

## Description

### FIELD OF THE INVENTION

The present invention pertains to the field of chewing gum. In particular, there is provided a novel degradable gum base comprising low molecular weight elastomer replacement compounds which are generally applicable for chewing gum formulations. In particular the present invention provides a gum base and a chewing gum comprising a polyester polymer obtainable by the polymerisation of two or more different cyclic ester monomers, wherein the cyclic ester monomers have a low glass transition temperature (Tg) and the polyester polymer has a glass transition temperature (Tg) in the range from (-20°C) to (-80°C).

### TECHNICAL BACKGROUND AND PRIOR ART

It is generally recognized that chewing gum that is dropped in indoor or outdoor environments gives rise to considerable nuisances and inconveniences due to fact that the dropped gum sticks firmly to e.g. street and pavement surfaces and to shoes and clothes of people being present or moving in the environments. Adding substantially to such nuisances and inconveniences is the fact that currently available chewing gum products are based on the use of elastomeric and resinous polymers of natural or synthetic origin that are substantially non-degradable in the environment.

City authorities and others being responsible for cleanliness of indoor and outdoor environments therefore have to exercise considerable efforts to remove dropped chewing gum, such efforts, however, being both costly and without satisfactory results.

There have been attempts to reduce the nuisances associated with the widespread use of chewing gum e.g. by improving cleaning methods to make them more effective with regard to removal of dropped chewing gum remnants or by incorporating antisticking agents into chewing gum formulations. However, none of these precautions have contributed significantly to solving the pollution problem.

The past two decades have seen an increasing amount of interest paid to synthetic polyesters for a variety of applications ranging from biomedical devices to gum bases. Many of these polymers are degradable and readily hydrolyse to their monomeric hydroxy-acids, which are easily removed by metabolic pathways. Degradable (also referred to as biodegradable) polymers are e.g. anticipated as alternatives to traditional non- or low-degradable plastics such as poly(styrene), poly(isobutylene), and poly(methyl-methacrylate).

Thus, it has recently been disclosed, e.g. in US 5,672,367 that chewing gum may be made from certain synthetic polymers having in their polymer chains chemically unstable bonds that can be broken under the influence of light or hydrolytically into water-soluble and non-toxic components. The claimed chewing gum comprises at least one degradable polyester polymer obtained by the polymerisation of cyclic esters, e.g. based on lactides, glycolides, trimethylene carbonate and ε-caprolactone. It is mentioned in this patent that chewing gum made from such polymers that are referred to as biodegradable are degradable in the environment.

US 6,153,231 discloses degradable chewing gum bases which comprises poly(lactic acid) co-polymers selected from poly(lactid acid-dimer-fatty acid-oxazoline) copolymers and poly(lactic acid-diol-urethane) copolymers.

In general, a chewing gum composition typically comprises a water-soluble bulk portion, a water-insoluble gum base portion and typically water-insoluble flavouring agents.

The water-insoluble gum base generally comprises one or more elastomeric compounds which may be of synthetic or natural origin, one or more resinous compounds, one or more elastomer plasticizers, fillers, softening compounds and minor amounts of miscellaneous ingredients such as antioxidants and colorants and others.

Elastomers provide the rubbery, cohesive nature to the gum base which varies depending on this components chemical structure and how it is blended with other ingredients. Typically, the elastomeric compounds in gum base are non-degradable. Such elastomers includes synthetic elastomers such as polyisobutylene, isobutylene-isoprene copolymer (butyl elastomer), styrene-butadiene copolymers, polyisoprene, polyethylene, polyvinylacetate, vinyl acetate-vinyl laurate copolymer and combinations hereof. However, also natural elastomers are presently applied in chewing gum bases. Such natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tunu, chilte, chiquibul and gutta hang kang.

It has now been found by the present inventors, that it is possible, in a chewing gum base, to replace the elastomeric compounds, such as e.g. polyisobutylene, with a degradable polymer comprising a polyester polymer obtainable by the polymerisation of two or more different cyclic ester monomers, wherein the cyclic ester monomers have a low glass transition temperature (Tg) and the polyester polymer has a glass transition temperature (Tg) in the range from (-20°C) to (-80°C). Thus, it has surprisingly been found that chewing gum bases prepared with such degradable polymers have the same or similar rheological properties (such as plasticity (storage modulus) and elasticity (loss modulus)) as e.g. conventional gum bases prepared with polyisobutylene (PIB).

As elastomeric compounds typically constitutes between 20 to 60% of the entire gum base composition, the replacement of this component of the gum base with a degradable component highly improve the general degradability of the gum base and hence the chewing gum as such.

### SUMMARY OF THE INVENTION

Accordingly, an aspect of the present invention pertains in a gum base comprising a polyester polymer obtainable by the polymerisation of two or more different cyclic ester monomers, wherein the cyclic ester monomers have a low glass transition temperature (Tg) and the polyester polymer has a glass transition temperature (Tg) in the range from (-20°C) to (-80°C).

In a still further aspect the invention relates to a chewing gum comprising a chewing gum base as defined above and below herein.

According to a further embodiment of the invention, a chewing gum or a gum base may comprise a partly substituted functional group, here an elastomer and where the substituted functional group is bio-degradable.

According to a further embodiment of the invention, it has been determined that conventional non-biodegradable functional groups as such may be substituted by other rheologically matching bio-degradable polymers.

### DETAILED DISCLOSURE

A strategy for creation of an elastomer for a gum base is to create a polymer that has a low glass transition temperature and is either totally amorphous or is slightly crystalline with a crystalline melting temperature below room temperature.

A preferred way, to obtain such a polymer, is to use two or more low-Tg monomers, in combination, so that the dissimilar repeating units hinder crystallization.

Accordingly, an aspect of the invention relates to a gum base comprising a polyester polymer obtainable by the polymerisation of two or more different cyclic ester monomers, wherein the cyclic ester monomers have a low glass transition temperature (Tg) and the polyester polymer has a glass transition temperature (Tg) in the range from (-20°C) to (-80°C).

Preferably, the cyclic ester monomers are selected from the group consisting of a 4-membered lactone, a 5-membered lactone, a 6-membered lactone, a 7-membered lactone, a 8-membered lactone, a 5-membered cyclic carbonate and a 6-membered cyclic carbonate.

The lactone is preferably selected from the group consisting of β-propiolactone, γ-butyrolactone, δ-valerolactone, ε-caprolactone and 7-heptanolactone; and the cyclic carbonate is preferably an ethylene carbonate or a trimethylene carbonate.

A preferred embodiment relates to a gum base comprising a polyester polymer obtainable by the polymerisation of two or more different cyclic ester monomers, wherein the cyclic ester monomers are selected from the group consisting of ε-caprolactone, δ-valerolactone and trimethylene carbonate.

The cyclic ester monomer ε-caprolactone is a preferred monomer and preferably the polyester polymer contain at least 50 mole% of ε-caprolactone.

Further, the polyester polymer has preferably a glass transition temperature (Tg) in the range from (-25°C) to (-75°C), more preferably the polyester polymer has a glass transition temperature (Tg) in the range from (-45°C) to (-75°C).

Below is described preferred embodiments relating to a gum base comprising a poly(ε-caprolactone-co-δ-valerolactone) and a gum base comprising a poly(ε-caprolactone-co-δ-valerolactone-co-trimethylene carbonate). The different embodiments of a gum base below are also relevant for a gum base as described above.

It is a major objective of the present invention to provide gum bases for chewing gum which results in chewing gum products that following chewing are more readily degraded in the environment if improperly dropped or discarded here by the user and/or which, relative to chewing gum comprising conventional non-degradable polymers can be removed more readily mechanically and/or by the use of cleaning agents.

Accordingly, the chewing gum base provided herein is a gum base which when applied in chewing gum, renders the chewing gum more capable of undergoing a physical, chemical and/or biological degradation whereby e.g. dumped chewing gum waste becomes more readily removable from the site of dumping or is eventually disintegrated to lumps or particles which are no longer recognisable as being chewing gum remnants. The degradation or disintegration of the gum base provided herein can be effected or induced by physical factors such as temperature, light, moisture, by chemical factors such as hydrolysis caused by a change in pH or by the action of appropriate enzymes capable of degrading the co-polymers according to the invention.

Accordingly, it is one objective of the present invention to provide a gum base comprising a degradable co-polymer consisting of ε-caprolactone and δ-valerolactone and a terpolymer consisting of ε-caprolactone, δ-valerolactone and trimethylene carbonate.

As mentioned above, it has been found possible, by applying such a co-polymer or terpolymer, to completely replace a synthetic and substantially non-degradable elastomeric compound such as polyisobutylene (PIB), which is typically applied in chewing gum compositions. Surprisingly, as will appear from the following examples, that by matching the rheological profil of the polyisobutylene with the rheological profil of a degradable co- or ter-polymers of ε-caprolactone, δ-valerolactone or trimethylene carbonate or mixtures thereof, then this replacement can be made without impairing the rheological properties of the gum base and the chewing gum made from such gum bases. Thus, it is possible to obtain rheological properties (such as plasticity (loss modulus) and elasticity (storage modulus)), which are similar to conventional gum bases prepared with PIB. Plasticity and elasticity are parameters that are essential for the texture in the final chewing gum.

It is contemplated that the above novel degradable polymers advantageously may be applied as elastomer replacement for other elastomeric compounds than polyisobutylene. Accordingly, it is also within the scope of the invention that the polymers poly(ε-caprolactone-co-δ-vaterolactone) and poly(ε-caprolactone-co-δ-valerolactone-co-trimethylene carbonate) may be applied as replacements for elastomeric compounds such as isobutylene-isoprene copolymer (butyl elastomer), styrene-butadiene copolymers, polyisoprene, polyethylene, polyvinyleacetate, vinyl acatate vinyl laurate copolymer and combinations thereof.

Thus, it is one objective of the present invention to provide a chewing gum base comprising poly(ε-caprolactone-co-δ-valerolactone) co-polymer.

The preparation of the poly(ε-caprolactone-co-δ-valerolactone) co-polymer may be performed by various suitable polymerisation processes which are well known in the art, e.g. by ring opening polymerisation (ROP) in the presence of an appropriate catalyst. Accordingly, in one embodiment stannous octoate (SO) may advantageously be applied as a catalyst and a low molecular weight alcohol (e.g. propylene glycol) as initiator to polymerise a mixture of ε-caprolactone and δ-valerolactone monomers and in order to obtain poly(ε-caprolactone-co-δ-valerolactone). However, it is also contemplated that the polymerisations may be mediated by applying various aluminum-alkoxide compounds as initiators.

It will be appreciated that the mol percentage of the monomers in the polymers of the present invention may be individually adjusted, by applying different polymerisation conditions, in order to obtain the desired rheological characteristics of the gum base in which the polymer is intended to be applied. Thus, it is contemplated that a wide range of mol percentages of the individual monomers may be advantageously applied.

Accordingly, in a useful embodiment, the poly(ε-caprolactone-co-δ-valerolactone) co-polymer may be synthesised to have a specific mol percentage of each of the monomers. Thus, in one embodiment of the invention, the mol percentage of ε-caprolactone in the poly(ε-caprolactone-co-δ-valerolactone) is in the range of 1 - 99 mol %. The mol percentage of the individual monomers of the synthesised polymers may e.g. be determined by means of e.g. ¹³C NMR-analysis.

In a further embodiment the mol percentage of ε-caprolactone in the poly(ε-caprolactone-co-8-valerolactone) is in the range of 40 - 80 mol %, including the range of 50 -70 mol %, such as the range of 55 - 65 mol %. In one embodiment, the mol percentage of ε-caprolactone in the poly(ε-caprolactone-co-δ-valerolactone) is about 60 mol %.

Likewise, it will be appreciated that the chewing gum base according to the invention advantageously may comprise poly(ε-caprolactone-co-δ-valerolactone) wherein the mol percentage of δ-valerolactone is in the range of 1 - 99 mol %, including the range of 20 - 60 mol %, such as the range of 30 - 50 mol %. In one embodiment the mol percentage of δ-valerolactone is about 40 mol %.

As mentioned above, it is contemplated that a suitable gum base may comprise poly(ε-caprolactone-co-δ-valerolactone) having different structural characteristics such as molecular weight including number average molecular weight (Mₙ) and weight average molecular weight (M_{w}). Accordingly, in one embodiment the chewing gum base according to the invention comprises poly(ε-caprolactone-co-δ-valerolactone) having a number average molecular weight (Mₙ) in the range of 10,000 - 125,000 g/mol, including the range of 20,000 - 100,000 g/mol, such as the range of 30,000 - 90,000 g/mol, including the range of 40,000 - 80,000 g/mol.

An important rheological feature for gum bases which are applied in chewing gum compositions, is the glass transition temperature (Tg), As used herein, the glass transition temperature means the temperature at which the ratio of the storage modulus G' (elasticity) and the loss modulus G" (plasticity) equals one. Storage modulus G' and loss modulus G" of polymers may in general be determined by applying a rheometer such as AR1000 from AT Instruments.

In one embodiment the gum base according to the invention comprises a poly(ε-caprolactone-co-δ-valerolactone) co-polymer having a glass transition temperature (Tg) which is less than 0°C. In useful embodiments, the glass transition temperature of the poly(ε-caprolactone-co-δ-valerolactone) is in the range of (-40°C) - (-80°C), including the range of (-50°C) - (-70°C).

The crystallinity may be depressed by incorporating chain branching or introducing a co-monomer. Possible biodegradable co-monomers include δ-valerolactone (VAL), a six-membered cyclic ester, and trimethylene carbonate (TMC), a six-membered cyclic carbonate

As mentioned above, it is a further objective of the present invention to provide a chewing gum base comprising poly(ε-caprolactone-co-δ-valerolactone-co-trimethylene carbonate). Accordingly, in a further aspect the degradable co-monomer trimethylene carbonate is included in the polymer according to the invention.

The preparation of poly(ε-caprolactone-co-δ-valerolactone-co-trimethylene carbonate) terpolymer may e.g. be performed by the above mentioned various polymerisation processes which are well known in the art.

In accordance with the invention, the mol percentage of ε-caprolactone in the poly(ε-caprolactone-co-δ-valerolactone-co-trimethylene carbonate) may in useful embodiments be in the range of 1 - 99 mol %, such as the range of 20 - 80 mol %, including the range of 40 -60 mol %. In a presently preferred embodiment the mol percentage of ε-caprolactone in the poly(ε-caprolactone-co-δ-valerolactone-co-trimethylene carbonate) is about 50 mol %.

Also in accordance with the invention, the gum base may comprise poly(ε-caprolactone-co-δ-valerolactone-co-trimethylene carbonate) having a mol percentage of δ-valerolactone in the range of I - 99 mol %, including the range of 20 - 60 mol %, such as in the range of 30 - 50 mol %. In one specific embodiment, the mol percentage of δ-valerolactone in the poly(ε-caprolactone-co-δ-valerolactone-co-trimethylene carbonate) is about 40 mol %.

The mol percentage of trimethylene carbonate in the poly(ε-caprolactone-co-δ-valerolactone-co-trimethylene carbonate) may in useful embodiments be in the range of range of 1 - 50 mol %, including the range of 2-30 mol %, such as the range of 5 - 15 mol %. In a useful embodiment, the mol percentage of trimethylene carbonate in the poly(ε-caprolactone-co-δ-valerolectone-co-trimethylene carbonate) is about 10 mol %.

As mentioned above, a structural characteristic such as molecular weight may be tailored for each specific gum base. Accordingly, in one embodiment the chewing gum base comprises a poly(ε-caprolactone-co-δ-valerolactone-co-trimethylene carbonate) with a average number molecular weight (Mₙ) in the range of 10,000 - 150,000 g/mol. In useful embodiments the molecular weight (Mₙ) of the poly(ε-caprolactone-co-δ-valerolactone-co-trimethylene carbonate) is in the range of 20,000 - 100,000 g/mol, including the range of 30,000 - 90,000 g/mol, such as the range of 40,000 - 80,000 g/mol.

In further useful embodiments, the gum base of the invention comprises poly(ε-caprolacione-co-δ-valerolactone-co-trimethylene carbonate) with a glass transition temperature Tg of less than 0°C. However, it is also with in the scope of the invention that the glass transition temperature Tg of the poly(ε-caprolactone-co-δ-valerolactone-co-trimethylene carbonate) is in the range of (-40°C) - (-80°C), including the range of (-50°C)- (-75°C).

As was mentioned a above, the present invention also provides a chewing gum comprising a chewing gum base comprising poly(ε-caprolactone-co-δ-valerolactone) co-polymer or comprising poly(ε-caprolactone-co-δ-valerolactone-co-trimethylene carbonate) terpolymer. However, it will be appreciated that in specific embodiments the co-polymer and the terpolymer may advantageously be combined in a gum base in order to achieve specific rheological features or characteristics. Accordingly, there is provided a chewing gum product which is based on the gum base according to the invention which is disclosed herein.

As used herein, the expressions "gum base" refers in general to the water insoluble part of the chewing gum which typically constitutes 10 to 99% by weight (preferably 10 to 50% by weight) of the total chewing gum formulation. Chewing gum base formulations typically comprises one or more elastomeric compounds which may be of synthetic or natural origin, one or more resinous compounds of natural or synthetic origin, fillers, softening compounds and minor amounts of miscellaneous ingredients such as antioxidants and colorants, etc.

Thus, it is within the scope of the invention that the gum base part, in addition to the degradable elastomers co-polymer poly(caprolactone-co-δ-valerolactone) and terpolymer poly(caprolactone-co-δ-valerolactone-co-trimethylene carbonate), contains a proportion of non-degradable polymeric elastomers and/or resins which may be of natural or synthetic origin. The proportion of such non-degradable polymers may be in the range of 1-99% by weight including the range of 5 to 90% by weight such as in the range of 10-50% by weight.

In this context, useful synthetic elastomers include, but are not limited to, synthetic elastomers listed in Food and Drug Administration, CFR, Title 21, Section 172,615, the Masticatory Substances, Synthetic) such as polyisobutylene with a gas pressure chromatography (GPC) average molecular weight in the range of about 10,000 to about 1,000,000 including the range of 50,000 to 80,000, isobutylene-isoprene copolymer (butyl elastomer), styrene-butadiene copolymers e.g. having styrene-butadiene ratios of about 1:3 to about 3:1, polyisoprene, polyethylene, polyvinyl acetat, vinyl acetate-vinyl laurate copolymer e.g. having a vinyl laurate content of about 5 to about 50% by weight such as 10 to 45% by weight of the copolymer, and combinations hereof.

It is e.g. common in the industry to combine in a gum base a synthetic elastomer having a high molecular weight and a low-molecular-weight elastomer. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Useful natural non-degradable elastomers include the elastomers listed in Food and Drug Administration, CFR, Title 21, Section 172,615, as "Masticatory Substances of Natural Vegetable Origin" including natural rubber compounds such as smoked or liquid latex and guayule and other natural gums including jelutong, lechi caspi, massaranduba balata, sorva, perillo, rosindinha, massaranduba chocolate, chicle, nispero, gutta hang kang, and combinations thereof. The preferred synthetic elastomer and natural elastomer concentrations vary depending on whether the chewing gum in which the base is used is adhesive or conventional, bubble gum or regular gum, as discussed below. Presently preferred natural elastomers include jelutong, chicle, massaranduba balata and sorva.

However, it is also contemplated that in useful embodiments, the gum base according to the invention which comprise poly(ε-caprolactone-co-δ-valerclactone) and/or poly(ε-caprolactone-co-δ-valerolactone-co-trimethylene carbonate), may advantageously further comprise elastomeric or resinous polymer compounds which are environmentally or biologically degradable.

In the present context the terms environmentally or biologically degradable polymer compounds refers to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognisable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Accordingly, suitable examples of additional environmentally or biologically degradable chewing gum base polymers which can be applied in accordance with the gum base of the present invention include degradable polyesters, polycarbonates, polyester amides, polypeptides, homopolymers of amino acids such as polylysine, and proteins including derivatives hereof such as e.g, protein hydrolysates including a zein hydrolysate. Particularly useful compounds of this type include polyester polymers obtained by the polymerisation of one or more cyclic esters such as lactide, glycolide, trimethylene carbonate, δ-valerolactone, β-propiolactvne and ε-caprolactone. Such degradable polymers may be homopolymers or copolymers, including block-polymers.

In accordance with the invention, the chewing gum base components which arc useful may include one or more resinous compounds contributing to obtain the desired masticatory properties and acting as plasticizers for the elastomers of the gum base composition. In the present context, useful elastomer plasticizers include synthetic resins such as polyvinyl acetate (PVAc) having a GPC average molecular weight in the range of 2,000 to about 90,000 such as the range of 3,000 to 80,000, and natural resins such as natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins, Other useful resinous compounds include synthetic resins such as terpene resins derived from alpha-pinene, beta-pinene, and/or d-limonene, natural terpene resins; and any suitable combinations of the foregoing, The preferred elastomer plasticizers will also vary depending on the specific application, and on the type of elastomert(s) being used.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

The fillers/texturisers may also include natural organic fibres such as fruit vegetable fibres, grain, rice, cellulose and combinations thereof.

As used herein the term "softener" designates an ingredient, which softens the gum base or chewing gum formulation and encompasses waxes, fats, oils, emulsifiers, surfactants and solubilisers.

A gum base formulation may, in accordance with the present invention comprise one or more fats e.g. tallow, hydrogenated tallow, any completely or partially hydrogenated animal fats, completely hydrogenated and partially hydrogenated vegetable oils or fats, cocoa butter, degreased cocoa butter, glycerol monostearate, glycerol triacetate, lecithin, mono-, di- and triglycerides, acetylated monoglycerides, fatty acids (e.g. stearic, palmitic, oleic and linoleic acids), and/or combinations thereof.

To soften the gum base further and to provide it with water binding properties, which confer to the gum base a pleasant smooth surface and reduce its adhesive properties, one or more emulsifiers is/are usually added to the composition, typically in an amount of 0 to 18% by weight, preferably 0 to 12% weight of the gum base. Mono- and diglycerides of edible fatty acids, lactic acid esters and acetic acid esters of mono- and di- and triglycerides of edible fatty acids, acetylated mono and diglycerides, sucrose polyesters or sugar esters of edible fatty acids including those disclosed in WO 00/25598, which is incorporated herein by reference, Na-, K-, Mg- and Ca-stearates, lecithin, hydroxylated lecithin, glycerol monostearate, glycerol triacetate, fatty acids (e.g. stearic, palmitic, oleic and linoleic acids), propylgallates and combinations thereof are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes are conventionally used for the adjustment of the consistency and for softening of the chewing gum base when preparing chewing gum bases. In connection with the present invention any conventionally used and suitable type of wax may be used, such as for instance rice bran wax, polyethylene wax, petroleum wax (refined paraffin and microcrystalline wax), paraffin, bees' wax, carnauba wax, and candelilla wax.

Furthermore, the gum base formulation may, in accordance with the present invention, comprise colourants and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

The composition of chewing gum base formulations which are admixed with chewing gum additives as defined below can vary substantially depending on the particular product to be prepared and on the desired masticatory and other sensory characteristics of the final product. However, typical ranges (weight%) of the above gum base components are: 5 to 100% by weight (e.g. 5 to 50% by weight) elastomeric compounds, 5 to 55% by weight elastomer plasticizers, 0 to 50% by weight filler/texturiser, 5 to 35% by weight softener and 0 to 1% by weight of miscellaneous ingredients such as antioxidants, colorants, etc.

A chewing gum centre formulation comprises, in addition to the above water-insoluble gum base components, a generally water soluble part comprising a range of chewing gum additives. In the present context, the term "chewing gum additive" is used to designate any component, which in a conventional chewing gum manufacturing process is added to the gum base. The major proportion of such conventionally used additives arc water soluble, but water-insoluble components, such as e.g. water-insoluble flavouring compounds, can also be included.

In the present context, chewing gum additives include bulk sweeteners, high intensity sweeteners, flavouring agents, softeners, emulsifiers, colouring agents, binding agents, acidulants, fillers, antioxidants and other components such as pharmaceutically or biologically active substances, conferring desired properties to the finished chewing gum product.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High intensity artificial sweetening agents can also be used alone or in combination with the above sweeteners. Preferred high intensity sweeteners include, but are not limited to sucralose, aspartame, salts of acesulfame, alitame, saccharin and its salts, cyclamic acid and its salts, glycyrrhizin, dihydrochalcones, thaumatin, monellin, sterioside and the like, alone or in combination. In order to provide longer lasting sweetness and flavour perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fibre extrusion may be used to achieve desired release characteristics. Encapsulation of sweetening agents can also be provided using another chewing gum component such as a resinous compound.

Usage level of the artificial sweetener will vary considerably and will depend on factors such as potency of the sweetener, rate of release, desired sweetness of the product, level and type of flavour used and cost considerations. Thus, the active level of artificial sweetener may vary from about 0.02 to about 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low calorie gum is desired, a low caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low calorie-bulking agent can be used.

Further chewing gum additives which may be included in the chewing gum according to the present invention include surfactants and/or solubilisers, especially when pharmaceutically or biologically active ingredients are present. As examples of types of surfactants to be used as solubilisers in a chewing gum composition according to the invention reference is made to H.P. Fiedler, Lexikon der Hilfstoffe für Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient the chewing gum may preferably also comprise a carrier known in the art.

The chewing gum according to the present invention may contain aroma agents and flavouring agents including natural and synthetic flavourings e.g. in the form of natural vegetable components, essential oils, essences, extracts, powders, including acids and other substances capable of affecting the taste profile. Examples of liquid and powdered flavourings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavour may be a natural flavouring agent which is freeze-dried, preferably in the form of a powder, slices or pieces of combinations thereof. The particle size may be less than 3 mm, such as less than 2 mm, more preferred less than 1 mm, calculated as the longest dimension of the particle. The natural flavouring agent may in a form where the particle size is from about 3 µm to 2 mm, such as from 4 µm to 1 mm. Preferred natural flavouring agents include seeds from a fruit e.g. from strawberry, blackberry and raspberry.

Various synthetic flavours, such as mixed fruit flavours may also be used in the present chewing gum centres. As indicated above, the aroma agent may be used in quantities smaller than those conventionally used. The aroma agents and/or flavours may be used in an amount of from 0.01 to about 30% by weight of the final product depending on the desired intensity of the aroma and/or flavour used. Preferably, the content of aroma/flavour is in the range of from 0.2 to 3% by weight of the total composition.

In one embodiment the chewing gum composition comprises a pharmaceutically or biologically active substance. Examples of such active substances, a comprehensive list of which is found e.g. in WO 00/25598, which is incorporated herein by reference, include drugs, dietary supplements, antiseptic agents, pH adjusting agents, anti-smoking agents and substances for the care or treatment of the oral cavity and the teeth such as hydrogen peroxide and compounds capable of releasing urea during chewing. Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

The gum centre of a coated chewing gum according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere.

The invention will now be described in further details in the following, non-limiting examples and figures wherein
Fig. 1 shows G* and tan(d) versus frequency for synthesised polyisobutylene substitutes (PIB sub.I, PIB sub. 2, PIB sub. 3 and PIB sub. 4) including the two standards of PIB I and PIB 2,
Fig. 2 shows G' vs. osc. torque (micro N.m) for gum bases shown in Table 4 plus additional 2 conventional gum bases,
Fig. 3 shows tan (d) vs. osc. torque (micro N.m) for gum bases shown in Table 4 plus additional 2 conventional gum bases, and
Fig. 4 shows G' vs, osc. torque (micro N.m) for synthesised polyisobutylene substitutes and mixture hereof.

### EXAMPLE 1

### Evaluation of presently applied butyl rubber in chewing gum base

The elastomer portion of chewing gum base in a standard gum base typically comprises approximately 3-30% of the total material, and often consists of two polyisobutylene (PIB) fractions differing in molecular weight. A sample of PIB presently applied as elastomer in gum base, was analyzed by size exclusion chromatography (SEC) (see Table 1). The low molecular weight component of the PIB consisted of a material with a weight average molecular weight, Mw, of about 60,000 g/mol and a polydispersity (PDI) that varies in the range of 1.5-2.2.

**TABLE 1: SEC Molecular weight data of currently applied PIB elastomers**

| Sample | Mn | Mw | PDI (Mw/Mn) |
|---|---|---|---|
| PIB 1 | 27,000 | 58,400 | 2.16 |
| PIB 2 | 39,800 | 59,200 | 1.49 |

### EXAMPLE2

### Preparation of polyisobutylene substitutes

Poly(ε-caprolactone-co-δ-valerolactone) (denoted poly(CAP-co-VAL) was prepared with a feed ratio of 60 mol % ε-caprolactone and 40 % δ-valerolactone (60 CAP:40 VAL). Poly(ε-caprolactone-co-δ-valerolactone-co-trimethylene carbonate) (denoted poly(CAP-co-VAL-TMC)) was prepared with a feed a ratio of 50 mol % ε-caprolactone, 40 mol % δ-valerolactone and 10 mol % trimethylene carbonate.

The samples indicated in the below Table 2 were prepared for evaluation as polyisobutylene (PIB) substitutes.

**TABLE 2**

| Sample | Composition | Tg (°C) | Tm (°C) | Mn (g/mol) | PDI |
|---|---|---|---|---|---|
| 2169-37 PIB sub, 1 | Poly(CAP-co-VAL)) | -65 | 15 | 60,390 | 1.47 |
| 52-1 PIB sub. 2 | Poly(CAP-co-VAL-TMC) | -65 | 10 | 51,190 | 1.63 |
| A PIB sub. 3 | Poly(CAP-co-VAL-TMC) | -60 | 16 | 50,780 | 1.44 |
| B PIB sub. 4 | Poly(CAP-co-VAGTMC) | -60 | 16 | 53,340 | 1.56 |

Sample 2169-37 (PIB sub. 1) was further purified, and the Mn was subsequently measured to 54,850 g/mol indicating that the sample had started to degrade.

The synthesised samples were characterised as follows:

### Characterisation

The structural characterisation of the above polymers was performed by routine ¹³C and ¹H NMR spectroscopy. Spectra were acquired on a Bruker AC-300 (300 MHz) spectrometer using 5 mm O.D. tubes and deuterated chloroform as solvent with internal standard tetramethylsilane (TMS). Sample concentrations were ~20% (w/v) for ¹³C NMR and ~5% (w/v) for ¹H NMR spectra.

¹³C NMR of poly(CAP-co-VAL) indicated that the feed ratio (60 mol% CAP and 40 mol % VAL) and the synthesised copolymer composition was approximately equal.

¹³C NMR of the terpolymer poly(CAP-co-VAL-TMC) revealed a random structure and that the synthesised terpolymer composition and the feed ratio of monomers were approximately equal.

Size exclusion chromatography (SEC) experiments were performed to determine the molecular weights and polydispersities (PDI) of the polymeric materials. The SEC system is equipped with a Waters Alliance 2690 Separations Module, an on-line multiangle laser light scattering (MALLS) detector (MiniDAWN™, Wyatt Technology Inc.), an interferometric refractometer (Optilab DSP™, Wyatt Technology Inc.) and one of two sets of PLgel™ (Polymer Laboratories Inc.) SEC columns. Each of the sets, consisting of two 3 µm or two 5 µm PLgel™ columns. The results are shown in Table 2.

Differential Scanning Calorimetry (DSC) was used to characterize the thermal properties of the obtained biodegradable materials. The glass transition temperature (Tg) and melting temperature (Tm) were measured using either a Mettler DSC 30 or Perkin Elmer DSC-7. The samples were heated from -100°C to 100°C at a heating rate of 10°C/min. quenched, and heated again from -100°C to 100°C at the same rate. The results are shown in Table 2.

Rheological measurement were applied in order to select the most appropriate samples for up-scaling purpose.

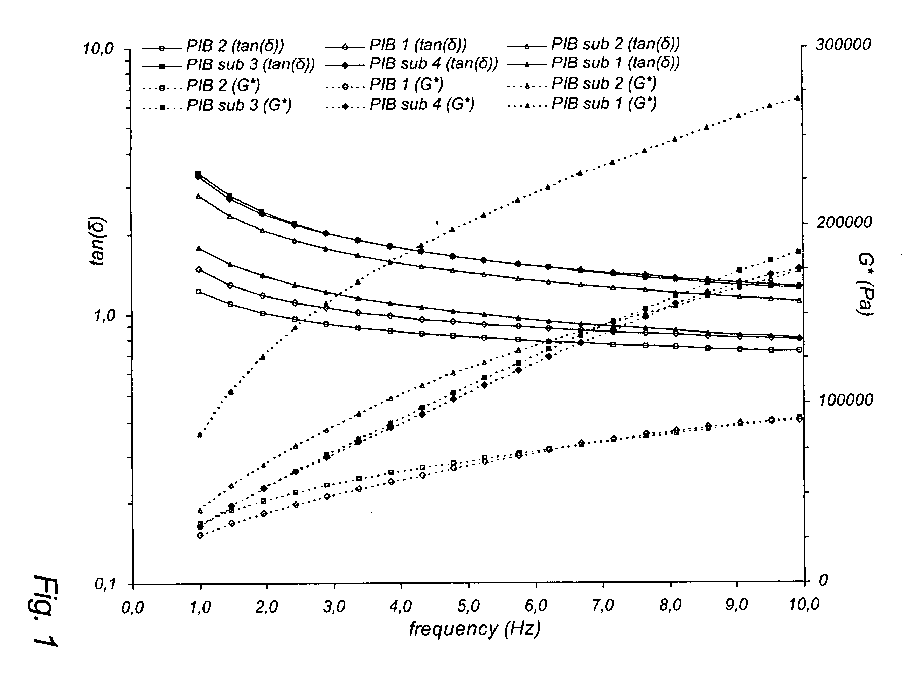

In Fig. 1 G* and tan(δ) versus frequency are shown. These parameters are essential regarding texture properties of the final chewing gum. G* is indicating the compactness/hardness of the chewing gum and tan(δ). defining the ratio between loss modulus and storage modulus. The rheological evaluations were made using a rheometer, type AR1000 from TA instrument. The oscillation measurement is performed at a stress within the linear viscoelastic region and a temperature of 70 °C with a parallel plate system (d=2,0 cm, hatched).

PIB sub. 1 and PIB sub. 2 were chosen to be the best match and scaled up for further investigation in gum base and chewing gum.

The characteristics of the up-scaled samples PIB sub. 1 and PIB sub, 2 is shown in the below Table 3

**TABLE 3**

| Sample | Composition | Tg (°C) | Tm (°C) | Mn (g/mol) | PDI |
|---|---|---|---|---|---|
| 52-19 PIB sub. I | poly(CAP-co-VAL) | -65 | 17 | 63,957 | 1.42 |
| 52-16T PIB sub. 2 | poly(CAP-co-VAL-TMC) | -65 | 8 | 72,409 | 1.67 |

### EXAMPLE 3

### Preparation of polyisobutylene substitutes by means of mixing biodegradable polymers based on ε-caprolactone, δ-valerolactone and/or trimethylene carbonate.

This example demonstrates the possibility of creating biodegradable polymer substitutes for polyisobutylene (PIB) by means of mixing different molecular weight poly(ε-caprolactone-co-δ-valerolactone) and poly(ε-caprolactone-co-δ-valerolactone-co-trimethylene carbonate).

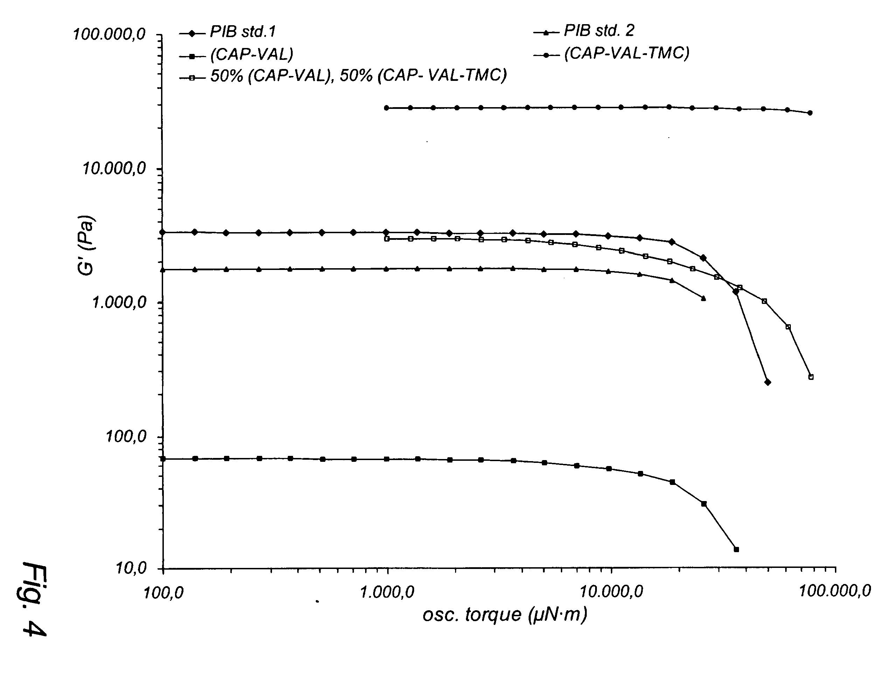

Fig. 4 shows how a poly(ε-caprolactone-co-δ-valerolactone) with a molecular weight (Mn) of 18180 g/mol and a poly(ε-caprolactone-co-δ-valerolactone-co-trimethylene carbonate) with a molecular weight (Mn) of 76950 g/mol in a 50/50% mixture gives a rheological match to the standard PIB's.

The rheological evaluations were made using a rheometer, type AR1000 from TA Instrument. The oscillation measurement is performed at a frequency of 1 Hz and a temperature of 70 °C with a parallel plate system (d=2,0 cm, hatched).

### EXAMPLE 4

### Replacement of polyisobutylen in gum base with synthesised poly(ε-caprolactone-co-δ-valerolactone) and poly(ε-caprolactone-co-δ-valerolactone-co-trimethylene carbonate)

The following experiment was performed in order to test synthesised poly(ε-caprolactone-co-δ-valerolactone) and poly(ε-caprolactone-co-δ-valerolactone-co-trimethylene carbonate) in a chewing gum base as replacements for polyisobutylene (PIB).

Thus, the synthesised poly(ε-caprolactone-co-δ-valerolactone) with Mn: 63,957 g/mol, Tg=-65 °C and Tm=17 °C (PIB sub. 1) and poly(ε-caprolactone-co-δ-valerolactone-co-tnimechylene carbonate) with Mn: 72,409 g/mol, Tg=-65 °C and Tm=8 °C (PIB sub. 2) were tested in different gum base formulations.

The different gum base formulations were prepared in accordance with Table 4. The amounts in the compositions are given in percentage by weight. Samples 118 and 119 were prepared without heating during the mixing process except in the end of the mixing process where heat was applied in order to melt the softening system.

**TABLE 4**

| | Standard | PIB sub. 1 | PIB sub. 2 | PIB sub. 2 | PIB sub. 2 |
|---|---|---|---|---|---|
| | (115) | (116) | (117) | (118)* | (119)* |
| Butyl | 5% | 5% | 5% | 5% | 5% |
| Elastomer plasticizer | 40% | 40% | 40% | 40% | 40% |
| Filler | 16.5% | 16.5% | 16.5% | 16.5% | 16.5% |
| PIB sub. 1 | - | 14% | - | 14% | - |
| PIB sub. 2 | - | - | 14% | - | 14% |
| PIB low Mw | 14% | - | - | - | - |
| softening system | 24.5%% | 24.5% | 24-5% | 24.5% | 24,5% |
| Chewing gum no. | 141 | 142 | 143 | 144 | 145 |

| | | | | | |
|---|---|---|---|---|---|
| PIB sub. 1: poly(ε-caprolactone-co-δ-valerolactone), Mn=63,957 g/mol, Tg=-65°C, Tm=17°C. PIB sub. 2: poly(ε-caprolactone-co-δ-valerolactone-co-trimethylene carbonate), Mn=72,409 g/mol, Tg=-65°C, Tm=8°C, *Low temperature mix | | | | | |

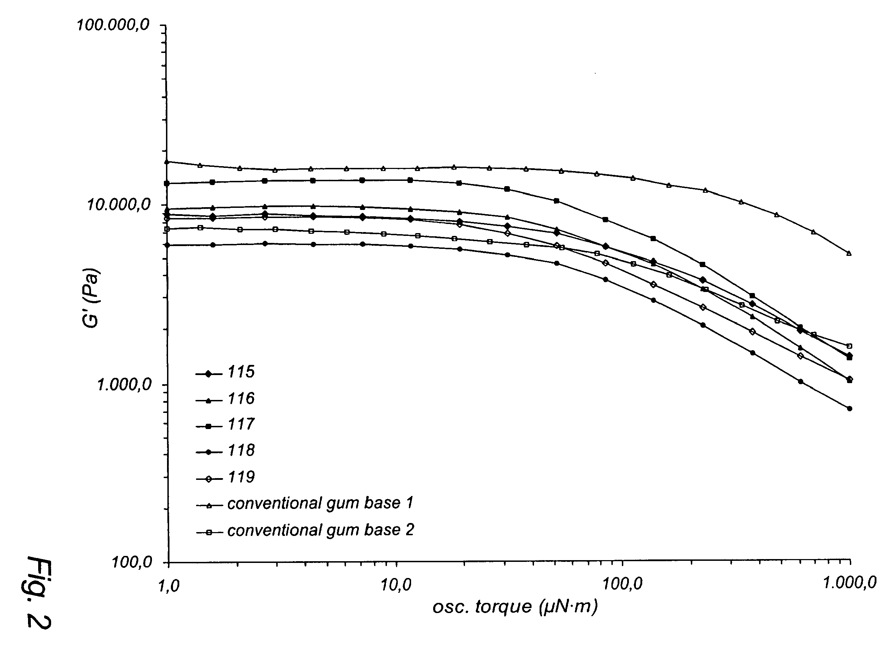

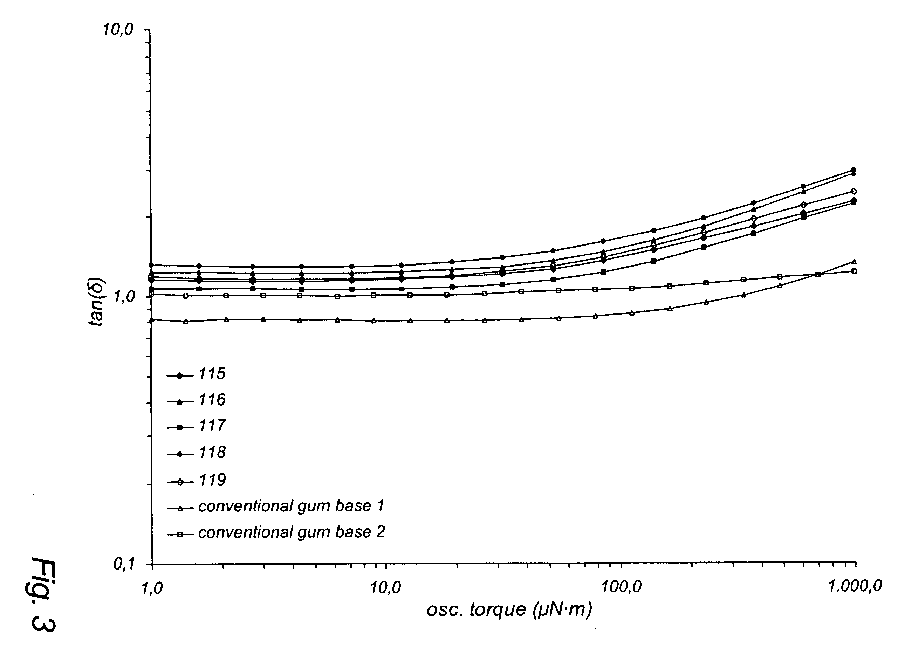

The above gum bases were evaluated by means of rheology measurements; G' and tan (δ) vs. osc. torque (micro N.m) giving the linear viscoelastic region and thereby indicating the stability of the gum base structure. The results of these measurements are shown in Fig 2 and Fig. 3. As can be seen from the figures all the gum bases are very close to the standard gum base 115 and the two conventional gum bases included in the test set-up. The deviations arc within the region of which gum bases can be described as having an acceptable quality.

The rheological evaluations were made using a rheometer, type AR1000 from TA Instrument. The oscillation measurement is performed at a stress within the linear viscoelastic region and a temperature of 70 °C with a parallel plate system (d=2,0 cm, hatched).

### EXAMPLE 5

### PIB replacement in a standard chewing gum formulation

The following experiment was conducted in order to test gum bases wherein polyisobutylene (PIB) was replaced with PIB sub. 1 and PIB sub. 2 in a standard peppermint chewing gum formulation. The standard peppermint chewing gum formulation was prepared in accordance with the below Table 5.

**TABLE 5**

| | % |
|---|---|
| Gum base | 38 |
| Sorbitol powder | 46 |
| Maltitolsyrup | 4 |
| Xylitol powder | 6 |
| Peppermint oil | 2.0 |
| Carbamid | 3.5 |
| Peppermint powder | 0.20 |
| Aspartame | 0.20 |
| Acesulfame | 0.10 |

Hardness was measured on the chewing gum samples indicated in Table 6. The hardness of the test samples were tested by an compression load test using an Instron instrument with a 4 mm DIA CYLINDER STAINLESS at a speed of 25 mm/min using a test distance of 3.5 mm into the chewing gum body.

**TABLE 6**

| Chewing gum no. | Hardness (N); mean of 5 |
|---|---|
| 141 (14% PIB) | 5.3 |
| 142 (14% PIB sub. 1) | 5.1 |
| 143 (14°/a PIB, Sub. 2) | 7.9 |
| 144 (14% PIB. Sub. 1) | 5.9 |
| 145 (14% PIB. Sub. 2) | 5.9 |

As can be seen from Table 6, the samples comprising either PIB sub, 1 or PIB sub. 2 are very close to the standard chewing gum (141) comprising 14% PIB. Hardness indicates that the initial chew is very close to the standard.

### EXAMPLE 6

### Sensorial evaluations

Test samples were evaluated by serving them to 10 trained panellists:
The following descriptive parameters were found when compared to the standard chewing gum (141).
Chewing gum no. 142: More cricky, waxy initial chew, but otherwise very close to standard 141.
Chewing gum no. 143: Harder/tough initial chew corresponds very well with hardness measurements, tacky, more cricky, otherwise very close to standard 141.
The samples mixed at lower temperatures seems to have better product quality regarding texture and tackiness (samples 144 and 145).

## Claims

1. An elastomer for chewing gum comprising a polyester polymer obtainable by the polymerisation of two or more different cyclic ester monomers, wherein the cyclic ester monomers have a low glass transition temperature (Tg) and the polyester polymer has a glass transition temperature (Tg) in the range from (-20°C) to (-80°C).

2. An elastomer for chewing gum of claim 1, wherein the cyclic ester monomers are selected from the group consisting of a 4-membered lactone, a 5-membered lactone, a 6-membered lactone, a 7-membered lactone, a 8-membered lactone, a 5-membered cyclic carbonate and a 6-membered cyclic carbonate.

3. An elastomer for chewing gum of claim 2, wherein the lactone is selected from the group consisting of β-propiolactone, γ-butyrolactone, δ-valerolactone, ε-caprolactone and 7-heptanolaetone.

4. An elastomer for chewing gum of claim 2, wherein cyclic carbonate is an ethylene carbonate or a trimethylene carbonate.

5. An elastomer for chewing gum of claim 2, wherein the cyclic ester monomers are selected from the group consisting of ε-caprolactone, δ-valerolactone and trimethylene carbonate.

6. An elastomer for chewing gum of any of claims 1-5, wherein at least one cyclic ester monomer is ε-caprolactone.

7. An elastomer for chewing gum of any of claims 1-6, wherein the polyester polymer contains at least 50 mole% of ε-caprolactone.

8. An elastomer for chewing gum of any of claims 1-7, wherein the polyester polymer has a glass transition temperature (Tg) in the range from (-25°C) to (-75°C), more preferably wherein the polyester polymer has a glass transition temperature (Tg) in the range from (-45°C) to (-75°C).

9. An elastomer for chewing gum according to claim 1, comprising poly(ε-caprolactone-co-δ-valerolactone).

10. An elastomer for chewing gum according to claim 9 wherein the mol percentage of ε-caprolactone in said poly(ε-caprolactone-co-δ-valerolactone) is in the range of 1 - 99 mol %.

11. An elastomer for chewing gum according to claim 10 wherein the mol percentage of ε-caprolactone in said poly(ε-caprolactone-co-δ-valerolactone) is in the range of 40 - 80 mol %.

12. An elastomer for chewing gum according to claim 11 wherein the mol percentage of ε-caprolactone in said poly(ε-caprolactone-co-δ-valerolactone) is in the range of 50 -70 mol %.

13. An elastomer for chewing gum according to claim 12 wherein the mol percentage of ε-caprolactone in said poly(ε-caprolactone-co-δ-valerolactone) is about 60 mol %.

14. An elastomer for chewing gum according to claim 9 wherein the mol percentage of δ-valerolectone in said poly(ε-caprolactone-co-δ-valerolactone) is in the range of 1 - 99 mol %.

15. An elastomer for chewing gum according to claim 14 wherein the mol percentage of δ-valerolactone in said poly(ε-caprolactone-co-δ-valerolactone) is in the range of 20 - 60 mol %.

16. An elastomer for chewing gum according to claim 15 wherein the mol percentage of δ-valerolactone in said poly(ε-caprolactone-co-δ-valerolactone) is in the range of 30 - 50 mol %.

17. An elastomer for chewing gum according to claim 16 wherein the mol percentage of δ-valerolactone in said poly(ε-caprolactone-co-δ-valerolactone) is about 40 mol %.

18. An elastomer for chewing gum according to claim 9 wherein the molecular weight (Mₙ) of said poly(ε-caprolactone-co-δ-valerolactone) is in the range of 10,000 - 125,000 g/mol.

19. An elastomer for chewing gum according to claim 18 wherein the molecular weight (Mₙ) of said poly(ε-caprolactone-co-δ-valerolactone) is in the range of 20,000 - 100,000 g/mol.

20. An elastomer for chewing gum according to claim 19 wherein the molecular weight (Mₙ) of said poly(ε-caprolactone-co-δ-valerolactone) is in the range of 30,000 - 90,000 g/mol.

21. An elastomer for chewing gum according to claim 20 wherein the molecular weight (Mₙ) of said poly(ε-caprolactone-co-δ-valerolactone) is in the range of 40,000 - 80,000 g/mol.

22. An elastomer for chewing gum according to claim 9 wherein the glass transition temperature Tg of said poly(ε-caprolactone-co-δ-valerolactone) is less than 0°C.

23. An elastomer for chewing gum according to claim 22 wherein the glass transition temperature Tg of said poly(ε-caprolactone-co-δ-valerolactone) is in the range of (-40°C) - (-80°C).

24. An elastomer for chewing gum according to claim 23 wherein the glass transition temperature T_{g} of said poly(ε-caprolactone-co-δ-valerolactone) is in the range of (-50°C) - (-70°C).

25. An elastomer for chewing gum according to claim 1, comprising poly(ε-caprolactone-co-δ-valerolactone-co-trimethylene carbonate).

26. An elastomer for chewing gum according to claim 25 wherein the mol percentage of ε-caprolactone in said poly(ε-caprolactone-co-δ-valerolactone-co-trimethylene carbonate) is in the range of 1 - 99 mol %.

27. An elastomer for chewing gum according to claim 26 wherein the mol percentage of ε-caprolactone in said poly(ε-caprotactone-co-δ-valerolactone-co-trimethylene carbonate) is in the range of 20 - 80 mol %.

28. An elastomer for chewing gum according to claim 27 wherein the mol percentage of ε-caprolactone in said poly(ε-caprolactone-co-δ-valerolactone-co-trimethylene carbonate) is in the range of 40 -60 mol %.

29. An elastomer for chewing gum according to claim 28 wherein the mol percentage of ε-caprolactone in said poly(ε-caprolactone-co-δ-valerolactone-co-trimethylene carbonate) is about 50 mol %.

30. An elastomer for chewing gum according to claim 25 wherein the mol percentage of δ-valerolactone in said poly(ε-caprolactone-co-δ-valerolactone-co-ttimethylene carbonate) is in the range of 1 - 99 mol %.

31. An elastomer for chewing gum according to claim 30 wherein the mol percentage of δ-valerolactone in said poly(ε-caprolactone-co-δ-valerolactone-co-trimethylene carbonate) is in the range of 20 - 60 mol %.

32. An elastomer for chewing gum according to claim 31 wherein the mol percentage of δ-valerolactone in said poly(ε-caprolactone-co-δ-valerolactone-co-trimethylene carbonate) is in the range of 30 - 50 mol %.

33. An elastomer for chewing gum according to claim 32 wherein the mol percentage of δ-valerolactone in said poly(ε-caprolactone-co-δ-valerolactone-co-trimethylene carbonate) is about 40 mol %.

34. An elastomer for chewing gum according to claim 25 wherein the mol percentage of trimethylene carbonate in said poly(ε-eaprolactone-co-δ-valerolactone-co-trimethylene carbonate) is in the range of 1- 50 mol %.

35. An elastomer for chewing gum according to claim 34 wherein the mol percentage of trimethylene carbonate in said poly(ε-caprolactone-co-δ-valerolactone-co-trimethylene carbonate) is in the range of 2 - 30 mol %.

36. An elastomer for chewing gum according to claim 25 wherein the mol percentage of trimethylene carbonate in said poly(ε-caprolactone-co-δ-valerolactone-co-trimethylene carbonate) is in the range of 5 - 15 mol %.

37. An elastomer for chewing gum according to claim 25 wherein the mol percentage of trimethylene carbonate in said poly(ε-caprolactone-co-δ-valerolactone-co-trimethylene carbonate) is about 10 mol %.

38. An elastomer for chewing gum according to claim 25 wherein the molecular weight (Mₙ) of said poly(ε-caprolactone-co-δ-valetulactone-co-trimethylene carbonate) is in the range of 10,000 - 150,000 g/mol.

39. An elastomer for chewing gum according to claim 38 wherein the molecular weight (Mₙ) of said poly(ε-caprolactone-co-δ-valerolacbone-co-trimethylene carbonate) is in the range of 20,000 - 100,000 g/mol.

40. An elastomer for chewing gum according to claim 39 wherein the molecular weight (Mₙ) of said poly(ε-caprolactone-co-δ-valerolactone-co-trimethylene carbonate) is in the range of 30,000 - 90,000 g/mol.

41. An elastomer for chewing gum according to claim 40 wherein the molecular weight (Mₙ) of said poly(ε-caprolactone-co-δ-valerolactone-co-trimethylene carbonate) is in the range of 40,000 - 80,000 g/mol.

42. An elastomer for chewing gum according to claim 25 wherein the glass transition temperature T_{g} of said poly(ε-caprolactone-co-δ-valerolactone-co-trimethylene carbonate) is less than 0°C.

43. An elastomer for chewing gum according to claim 42 wherein the glass transition temperature T_{g} of said poly(ε-caprolactone-co-δ-valerolactone-co-trimethylene carbonate) is in the range of (-40°C) - (-80°C).

44. An elastomer for chewing gum according to claim 43 wherein the glass transition temperature T_{g} of said poly(ε-caprolactvne-co-δ-valerolactone-co-trimethylene carbonate) is in the range of (-50°C) - (-75°C).

45. An elastomer for chewing gum comprising a mixture of a poly(ε-caprolactone-co-δ-valerolactone) according to any of claims 9-24 and a poly(ε-eaprolaetone-co-δ-valerolactone-co-tnimethylene carbonate) according to any of claims 25-44.

46. Gum base comprising elastomer and resin,
wherein said elastomer comprises a biodegradable polymer according to any of the claims 1-45.

47. Gum base according to claim 46, wherein said resin comprises a non-biodegradable resin.

48. Gum base according to claim 46 or 47, wherein said gum base comprises softener.

49. Chewing gum comprising elastomer and resin, wherein said elastomer comprises a biodegradable polymer according to any of the claim 1-45.

50. Chewing gum according to claim 49, wherein said resin comprises a non-biodegradable resin.

51. Chewing gum according to claim 49 or 50, wherein said gum base comprises softener.

## Patentansprüche

1. Elastomer für Kaugummi, umfassend ein Polyester-Polymer, das erhältlich ist durch die Polymerisation von zwei oder mehr verschiedenen cyclischen Ester-Monomeren, wobei die cyclischen Ester-Monomere eine niedrige Glasübergangstemperatur (Tg) aufweisen und das Polyester-Polymer eine Glasübergangstemperatur (Tg) im Bereich von (-20°C) bis (-80°C) aufweist.

2. Elastomer für Kaugummi nach Anspruch 1, bei dem die cyclischen Ester-Monomere ausgewählt sind aus der Gruppe bestehend aus einem 4-gliedrigen Lacton, einem 5-gliedrigen Lacton, einem 6-gliedrigen Lacton, einem 7-gliedrigen Lacton, einem 8-gliedrigen Lacton, einem 5-gliedrigen cyclischen Carbonat und einem 6-gliedrigem cyclischen Carbonat.

3. Elastomer für Kaugummi nach Anspruch 2, bei dem das Lacton ausgewählt ist aus der Gruppe bestehend aus β-Propiolacton, γ-Butyrolacton, δ-Valerolacton, ε-Caprolacton und 7-Heptanolacton.

4. Elastomer für Kaugummi nach Anspruch 2, bei dem das cyclische Carbonat ein Ethylencarbonat oder ein Trimethylencarbonat ist.

5. Elastomer für Kaugummi nach Anspruch 2, bei dem die cyclischen Ester-Monomere ausgewählt sind aus der Gruppe bestehend aus ε-Caprolacton, δ-Valerolacton und Trimethylencarbonat.

6. Elastomer für Kaugummi nach irgendeinem der Ansprüche 1-5, bei dem mindestens ein cyclisches Ester-Monomer ε-Caprolacton ist.

7. Elastomer für Kaugummi nach irgendeinem der Ansprüche 1-6, bei dem das Polyester-Polymer mindestens 50 Mol-% ε-Caprolacton enthält,

8. Elastomer für Kaugummi nach irgendeinem der Ansprüche 1-7, bei dem das Polyester-Polymer eine Glasübergangstemperatur (Tg) im Bereich von (-25°C) bis (-75°C) aufweist, bevorzugter, bei dem das Polyester-Polymer eine Glasübergangstemperatur (Tg) im Bereich von (-45°C) bis (-75°C) aufweist.

9. Elastomer für Kaugummi nach Anspruch 1, umfassend Poly(ε-caprolacton-co-δ-valerolacton).

10. Elastomer für Kaugummi nach Anspruch 9, bei dem der Molprozentsatz an ε-Caprolacton in dem Poly(ε-caprolacton-co-δ-valerolacton) im Bereich von 1 - 99 Mol-% liegt.

11. Elastomer für Kaugummi nach Anspruch 10, bei dem der Molprozentsatz an ε-Caprolacton in dem Poly(ε-caprolacton-co-δ-valerolacton) im Bereich von 40 - 80 Mol-% liegt.

12. Elastomer für Kaugummi nach Anspruch 11, bei dem der Molprozentsatz an ε-Caprolacton in dem Poly(ε-caprolacton-co-δ-valerolacton) im Bereich von 50 - 70 Mol-% liegt.

13. Elastomer für Kaugummi nach Anspruch 12, bei dem der Molprozentsatz an ε-Caprolacton in dem Poly(ε-caprolacton-co-δ-valerolacton) etwa 60 Mol-% beträgt.

14. Elastomer für Kaugummi nach Anspruch 9, bei dem der Molprozentsatz an δ-Valerolacton in dem Poly(ε-caprolacton-co-δ-valerolacton) im Bereich von 1 - 99 Mol-% liegt.

15. Elastomer für Kaugummi nach Anspruch 14, bei dem der Molprozentsatz an δ-Valerolacton in dem Poly(ε-caprolacton-co-δ-valerolacton) im Bereich von 20 - 60 Mol-% liegt.

16. Elastomer für Kaugummi nach Anspruch 15, bei dem der Molprozentsatz an δ-Valerolacton in dem Poly(ε-caprolacton-co-δ-valerolacton) im Bereich von 30 - 50 Mol-% liegt.

17. Elastomer für Kaugummi nach Anspruch 16, bei dem der Molprozentsatz an δ-Valerolacton in dem Poly(ε-caprolacton-co-δ-valerolacton) etwa 40 Mol-% beträgt.

18. Elastomer für Kaugummi nach Anspruch 9, bei dem das Molekulargewicht (Mₙ) des Poly(ε-caprolacton-co-δ-valerolactons) im Bereich von 10.000 - 125.000 g/Mol liegt.

19. Elastomer für Kaugummi nach Anspruch 18, bei dem das Molekulargewicht (Mₙ) des Poly(ε-caprolacton-co-δ-valerolactons) im Bereich von 20.000 - 100.000 g/Mol liegt.

20. Elastomer für Kaugummi nach Anspruch 19, bei dem das Molekulargewicht (Mₙ) des Poly(ε-caprolacton-co-δ-valerolactons) im Bereich von 30.000 - 90.000 g/Mol liegt.

21. Elastomer für Kaugummi nach Anspruch 20, bei dem das Molekulargewicht (Mₙ) des Poly(ε-caprolacton-co-δ-valerolectons) im Bereich von 40.000 - 80.000 g/Mol liegt.

22. Elastomer für Kaugummi nach Anspruch 9, bei dem die Glasübergangstemperatur T_{g} des Poly(ε-caprolacton-co-δ-valerolactons) weniger als 0°C beträgt.

23. Elastomer für Kaugummi nach Anspruch 22, bei dem die Glasübergangstemperatur T_{g} des Poly(ε-caprolacton-co-δ-valerolactons) im Bereich von (-40°C) - (-80°C) liegt.

24. Elastomer für Kaugummi nach Anspruch 23, bei dem die Glasübergangstemperatur T_{g} des Poly(ε-caprolacton-co-δ-valerolactons) im Bereich von (-50°C) - (-70°C) liegt.

25. Elastomer für Kaugummi nach Anspruch 1, umfassend Poly(ε-caprolacton-co-δ-valerolacton-co-trimethylencarbonat).

26. Elastomer für Kaugummi nach Anspruch 25, bei dem der Molprozentsatz an ε-Caprolacton in dem Poly(ε-caprolacton-co-δ-valerolacton-co-triniethylencarbonat) im Bereich von 1 - 99 Mol-% liegt.

27. Elastomer für Kaugummi nach Anspruch 26, bei dem der Molprozentsatz an ε-Caprolacton in dem Poly(ε-caprolacton-co-δ-valerolacton-co-trimethylencarbonat) im Bereich von 20 - 80 Mol-% liegt.

28. Elastomer für Kaugummi nach Anspruch 27, bei dem der Molprozentsatz an ε-Caprolacton in dem Poly(ε-caprolacton-co-δ-valerolacton-co-trimethylencarbonat) im Bereich von 40 - 60 Mol-% liegt.

29. Elastomer für Kaugummi nach Anspruch 28, bei dem der Molprozentsatz an ε-Caprolacton in dem Poly(ε-caprolacton-co-δ-valerolacton-co-trimethylencarbonat) etwa 50 Mol-% beträgt.

30. Elastomer für Kaugummi nach Anspruch 25, bei dem der Molprozentsatz an δ-Valerolacton in dem Poly(ε-caprolacton-co-δ-valerolacton-co-trimethylencarbonat) im Bereich von 1-99 Mol-% liegt.

31. Elastomer für Kaugummi nach Anspruch 30, bei dem der Molprozentsatz an δ-Valerolacton in dem Poly(ε-caprolacton-co-δ-valerolacton-co-trimethylencarbonat) im Bereich von 20 - 60 Mol-% liegt.

32. Elastomer für Kaugummi nach Anspruch 31, bei dem der Molprozentsatz an δ-Valerolacton in dem Poly(ε-caprolacton-co-δ-valerolacton-co-trimethylencarbonat) im Bereich von 30 - 50 Mol-% liegt.

33. Elastomer für Kaugummi nach Anspruch 32, bei dem der Molprozentsatz an δ-Valerolacton in dem Poly(ε-caprolacton-co-δ-valerolacton-co-trimethylencarbonat) etwa 40 Mol-% beträgt.

34. Elastomer für Kaugummi nach Anspruch 25, bei dem der Molprozentsatz an Trimethylencarbonat in dem Poly(ε-caprolacton-co-δ-valerolacton-co-trimethylencarbonat) im Bereich von 1 - 50 Mol-% liegt.

35. Elastomer für Kaugummi nach Anspruch 34, bei dem der Molprozentsatz an Trimethylencarbonat in dem Poly(ε-caprolacton-co-δ-valerolacton-co-trimethylencarbonat) im Bereich von 2 - 30 Mol-% liegt.

36. Elastomer für Kaugummi nach Anspruch 25, bei dem der Molprozentsatz an Trimethylencarbonat in dem Poly(ε-caprolacton-co-δ-valerolacton-co-trimethylencarbonat) im Bereich von 5 - 15 Mol-% liegt.

37. Elastomer für Kaugummi nach Anspruch 25, bei dem der Molprozentsatz an Trimethylencarbonat in dem Poly(ε-caprolacton-co-δ-valerolacton-co-trimethylencarbonat) etwa 10 Mol-% beträgt.

38. Elastomer für Kaugummi nach Anspruch 25, bei dem das Molekulargewicht (Mₙ) des Poly(ε-caprolacton-co-δ-valerolacton-co-trimethylencarbonats) im Bereich von 10.000 - 150.D00 g/Mol liegt.

39. Elastomer für Kaugummi nach Anspruch 38, bei dem das Molekulargewicht (Mₙ) des Poly(ε-caprolacton-co-δ-valerolacton-co-trimethylencarbonats) im Bereich von 20.000 - 100.000 g/Mol liegt.

40. Elastomer für Kaugummi nach Anspruch 39, bei dem das Molekulargewicht (Mₙ) des Poly(ε-caprolacton-co-δ-valerolacton-co-trimethylencarbonats) im Bereich von 30.000 - 90.000 g/Mol liegt.

41. Elastomer für Kaugummi nach Anspruch 40, bei dem das Molekulargewicht (Mₙ) des Poly(ε-caprolacton-co-δ-valerolacton-co-trimethylencarbonats) im Bereich von 40.000 - 80.000 g/Mol liegt.

42. Elastomer für Kaugummi nach Anspruch 25, bei dem die Glasübergangstemperatur T_{g} des Poly(ε-caprolacton-co-δ-valerolacton-co-trimethylencarbonats) weniger als 0°C beträgt.

43. Elastomer für Kaugummi nach Anspruch 42, bei dem die Glasübergangstemperatur T_{g} des Poly(ε-caprolacton-co-δ-valerolacton-co-trimethylencarbonats) im Bereich von (-40°C) - (-80°C) liegt.

44. Elastomer für Kaugummi nach Anspruch 43, bei dem die Glasübergangstemperatur T_{g} des Poly(ε-caprolacton-co-δ-valerolacton-co-trimethylencarbonats) im Bereich von (-50°C) - (-75°C) liegt.

45. Elastomer für Kaugummi, umfassend eine Mischung eines Poly(ε-caprolacton-co-δ-valerolactons) nach irgendeinem der Ansprüche 9-24 und eines Poly(ε-caprolacton-co-δ-valerolacton-co-trimethylencarbonats) nach irgendeinem der Ansprüche 25-44.

46. Gummibasis, umfassend Elastomer und Harz, bei der das Elastomer ein bioabbaubares Polymer nach irgendeinem der Ansprüche 1-45 umfasst.

47. Gummibasis nach Anspruch 46, bei der das Harz ein nicht bioabbaubares Harz umfasst.

48. Gummibasis nach Anspruch 46 oder 47, bei der die Gummibasis Weichmacher umfasst.

49. Kaugummi, umfassend Elastomer und Harz, wobei das Elastomer ein bioabbaubares Polymer nach irgendeinem der Ansprüche 1-45 umfasst.

50. Kaugummi nach Anspruch 49, bei dem das Harz ein nicht bioabbaubares Harz umfasst.

51. Kaugummi nach Anspruch 49 oder 50, bei dem die Gummibasis Weichmacher umfasst.

## Revendications

1. Elastomère pour gomme à mâcher comprenant un polymère de polyester pouvant être obtenu par la polymérisation de deux monomères différents d'ester cyclique ou plus, dans lequel les monomères d'ester cyclique possèdent une température de transition vitreuse basse (Tg) et le polymère de polyester possède une température de transition vitreuse (Tg) dans la plage de (-20 °) à (-80 °C).

2. Elastomère pour gomme à mâcher selon la revendication 1, dans lequel les monomères d'ester cyclique sont choisis dans le groupe constitué par une lactone à 4 chaînons, une lactone à 5 chaînons, une lactone à 6 chaînons, une lactone à 7 chaînons, une lactone à 8 chaînons, un carbonate cyclique à 5 chaînons et un carbonate cyclique à 6 chaînons.

3. Elastomère pour gomme à mâcher selon la revendication 2, dans lequel la lactone est choisie dans le groupe constitué par la β-propiolactone, la γ-butyrolactone, la δ-valérolactone, l'ε-caprolactone et la 7-heptanolactone.

4. Elastomère pour gomme à mâcher selon la revendication 2, dans lequel le carbonate cyclique est un carbonate d'éthylène ou un carbonate de triméthylène.

5. Elastomère pour gomme à mâcher selon la revendication 2, dans lequel les monomères d'ester cyclique sont choisis dans le groupe constitué par l'ε-caprolactone, la δ-valérolactone et le carbonate de triméthylène.

6. Elastomère pour gomme à mâcher selon l'une quelconque des revendications 1 à 5, dans lequel au moins un monomère d'ester cyclique est l'ε-caprolactone.

7. Elastomère pour gomme à mâcher selon l'une quelconque des revendications 1 à 6, dans lequel le polymère de polyester contient au moins 50 % en mole d'ε-caprolactone.

8. Elastomère pour gomme à mâcher selon l'une quelconque des revendications 1 à 7, dans lequel le polymère de polyester possède une température de transition vitreuse (Tg) dans la plage de (-25 °C) à (-75°C), et de manière davantage préférée dans lequel le polymère de polyester possède une température de transition vitreuse (Tg) dans la plage de (-45 °C) à (-75 °C).

9. Elastomère pour gomme à mâcher selon la revendication 1, comprenant un poly(ε-caprolactone-co-δ-valérolactone),

10. Elastomère pour gomme à mâcher selon la revendication 9, dans lequel le pourcentage en mole d'ε-caprolactone dans ledit poly(ε-caprolactone-co-δ-valérolactone) est dans la plage de 1 à 99 % en mole.

11. Elastomère pour gomme à mâcher selon la revendication 10, dans lequel le pourcentage en mole d'ε-caprolactone dans ledit poly(ε-caprolactone-co-δ-valérolactone) est dans la plage de 40 à 80 % en mole.

12. Elastomère pour gomme à mâcher selon la revendication 11, dans lequel le pourcentage en mole d'ε-caprolactone dans ledit poly(ε-caprolactone-co-δ-valérolactone) est dans la plage de 50 à 70 % en mole.

13. Elastomère pour gomme à mâcher selon la revendication 12, dans lequel le pourcentage en mole d'ε-caprolactone dans ledit poly(ε-caprolactone-co-δ-valérolactone) est d'environ 60 % en mole.

14. Elastomère pour gomme à mâcher selon la revendication 9, dans lequel le pourcentage en mole de δ-valérolactone dans ledit poly(ε-caprolactone-co-δ-valérolactone) est dans la plage de 1 à 99 % en mole.

15. Elastomère pour gomme à mâcher selon la revendication 14, dans lequel le pourcentage en mole de δ-valérolactone dans ledit poly(ε-caprolactone-co-δ-valérolactone) est dans la plage de 20 à 60 % en mole.

16. Elastomère pour gomme à mâcher selon la revendication 15, dans lequel le pourcentage en mole de δ-valérolactone dans ledit poly(ε-caprolactone-co-δ-valérolactone) est dans la plage de 30 à 50 % en mole.

17. Elastomère pour gomme à mâcher selon la revendication 16, dans lequel le pourcentage en mole de δ-valérolactone dans ledit poly(ε-caprotactone-co-δ-valérolactone) est d'environ 40 % en mole.

18. Elastomère pour gomme à mâcher selon la revendication 9, dans lequel le poids moléculaire (Mₙ) dudit poly(ε-caprolactone-co-δ-valérolactone) est dans la plage de 10 000 à 125 000 g/mole.

19. Elastomère pour gomme à mâcher selon la revendication 18, dans lequel le poids moléculaire (Mₙ) dudit poly(ε-caprolactone-co-δ-valérolactone) est dans la plage de 20 000 à 100 000 g/mole.

20. Elastomère pour gomme à mâcher selon la revendication 19, dans lequel le poids moléculaire (Mₙ) dudit poly(ε-caprolactone-co-δ-valérolactone) est dans la plage de 30 000 à 90 000 g/mole.

21. Elastomère pour gomme à mâcher selon la revendication 20, dans lequel le poids moléculaire (Mₙ) dudit poly(ε-caprolactone-co-δ-valérolactone) est dans la plage de 40 000 à 80 000 g/mole.

22. Elastomère pour gomme à mâcher selon la revendication 9, dans lequel la température de transition vitreuse T_{g} dudit poly(ε-caprolactone-co-δ-valérolactone) est inférieure à 0 °C.

23. Elastomère pour gomme à mâcher selon la revendication 22, dans lequel la température de transition vitreuse Tg dudit poly(ε-caprolactone-co-δ-valérolactone) est dans la plage de (-40 °C) à (-80 °C).

24. Elastomère pour gomme à mâcher selon la revendication 23, dans lequel la température de transition vitreuse T_{g} dudit poly(ε-caprotactone-co-δ-valérolactone) est dans la plage de (-50 °C) à (-70 °C).

25. Elastomère pour gomme à mâcher selon la revendication 1, comprenant un poly(ε-caprolactone-co-δ-valérolactone-co-carbonate de triméthylène).

26. Elastomère pour gomme à mâcher selon la revendication 25, dans lequel le pourcentage en mole d'ε-caprolactone dans ledit poly(ε-caprolactone-co-δ-valérolactone-co-carbonate de triméthylène) est dans la plage de 1 à 99 % en mole.

27. Elastomère pour gomme à mâcher selon la revendication 26, dans lequel le pourcentage en mole d'ε-caprolactone dans ledit poly(ε-caprolactone-co-δ-valérolactone-co-carbonate de triméthylène) est dans la plage de 20 à 80 % en mole.

28. Elastomère pour gomme à mâcher selon la revendication 27, dans lequel le pourcentage en mole d'ε-caprolactone dans ledit poly(ε-caprolactone-co-δ-valérolactone-co-carbonate de triméthylène) est dans la plage de 40 à 60 % en mole.

29. Elastomère pour gomme à mâcher selon la revendication 28, dans lequel le pourcentage en mole d'ε-caprolactone dans ledit poly(ε-caprolactone-co-δ-valérolactone-co-carbonate de triméthylène) est d'environ 50 % en mole.

30. Elastomère pour gomme à mâcher selon la revendication 25, dans lequel le pourcentage en mole de δ-valérolactone dans ledit poly(ε-caprolactone-co-δ-valérolactone-co-carboriate de triméthylène) est dans la plage de 1 à 99 % en mole.

31. Elastomère pour gomme à mâcher selon la revendication 30, dans lequel le pourcentage en mole de δ-valérolactone dans ledit poly(ε-caprolactone-co-δ-valérolactone-co-carbonate de triméthylène) est dans la plage de 20 à 60 % en mole.

32. Elastomère pour gomme à mâcher selon la revendication 31, dans lequel le pourcentage en mole de δ-valérolactone dans ledit poly(ε-caprolactone-co-δ-valérolactone-co-carbonate de triméthylène) est dans la plage de 30 à 50 % en mole.

33. Elastomère pour gomme à mâcher selon la revendication 32, dans lequel le pourcentage en mole de δ-valérolactone dans ledit poly(ε-caprolactone-co-δ-valérolactone-co-carbonate de trimethylene) est d'environ 40 % en mole.

34. Elastomère pour gomme à mâcher selon la revendication 25, dans lequel le pourcentage en mole de carbonate de triméthylène dans ledit poly(ε-caprolactone-co-δ-valérolactone-co-carbonate de triméthylène) est dans la plage de 1 à 50 % en mole.

35. Elastomère pour gomme à mâcher selon la revendication 34, dans lequel le pourcentage en mole de carbonate de triméthylène dans ledit poly(ε-caprolactone-co-δ-valérolactone-co-carbonate de triméthylène) est dans la plage de 2 à 30 % en mole.

36. Elastomère pour gomme à mâcher selon la revendication 25, dans lequel le pourcentage en mole de carbonate de triméthylène dans ledit poly(ε-caprolactone-co-δ-valérolactone-co-carbonate de trimethylene) est dans la plage de 5 à 15 % en mole.

37. Elastomère pour gomme à mâcher selon la revendication 25, dans lequel le pourcentage en mole de carbonate de triméthylène dans ledit poly(ε-caprolactone-co-δ-valérolactone-co-carbonate de triméthylène) est d'environ 10 % en mole.

38. Elastomère pour gomme à mâcher selon la revendication 25, dans lequel le poids moléculaire (Mₙ) dudit poly(ε-caprolactone-co-δ-valérolactone-co-carbonate de triméthylène) est dans la plage de 10 000 à 150 000 g/mole.

39. Elastomère pour gomme à mâcher selon la revendication 38, dans lequel le poids moléculaire (Mₙ) dudit poly(ε-caprolactone-co-δ-valérolactone-co-carbonate de triméthylène) est dans la plage de 20 000 à 100 000 g/mole.

40. Elastomère pour gomme à mâcher selon la revendication 39, dans lequel le poids moléculaire (Mₙ) dudit poly(ε-caprolactone-co-δ-valérolactone-co-carbonate de triméthylène) est dans la plage de 30 000 à 90 000 g/mole.

41. Elastomère pour gomme à mâcher selon la revendication 40, dans lequel le poids moléculaire (Mₙ) dudit poly(ε-caprolactone-co-δ-valérolactorie-co-carbonate de triméthylène) est dans la plage de 40 000 à 80 000 g/mole.

42. Elastomère pour gomme à mâcher selon la revendication 25, dans lequel la température de transition vitreuse T_{g} dudit poly(ε-caprolactone-co-δ-valérolactone-co-carbonate de triméthylène) est inférieure à 0 °C.

43. Elastomère pour gomme à mâcher selon la revendication 42, dans lequel la température de transition vitreuse T_{g} dudit poly(ε-caprolactone-co-δ-valérolactone-co-carbonate de triméthylène) est dans la plage de (-40 °C) à (-80 °C).

44. Elastomère pour gomme à mâcher selon la revendication 43, dans lequel la température de transition vitreuse T_{g} dudit poly(ε-caprolactone-co-δ-valérolactone-co-carbonate de triméthylène) est dans la plage de (-50 °C) à (-75 °C).

45. Élastomère pour gomme à mâcher comprenant un poly(ε-caprolactone-co-ô-valérolactone) selon l'une quelconque des revendications 9 à 24 et un poly(ε-caprolaotone-co-δ-valérolactone-co-carbonate de triméthylène) selon l'une quelconque des revendications 25 à 44.

46. Base de gomme comprenant un élastomère et une résine, dans laquelle ledit élastomère comprend un polymère biodégradable selon l'une quelconque des revendications 1 à 45.

47. Base de gomme selon la revendication 46, dans laquelle ladite résine comprend une résine non-biodégradable.

48. Base de gomme selon la revendication 46 ou 47, dans laquelle ladite base de gomme comprend un ramollissant.

49. Gomme à mâcher comprenant un élastomère et une résine, dans laquelle ledit élastomère comprend un polymère biodégradable selon l'une quelconque des revendications 1 à 45.

50. Gomme à mâcher selon la revendication 49, dans laquelle ladite résine comprend une résine non-biodégradable.

51. Gomme à mâcher selon la revendication 49 ou 50, dans laquelle ladite base de gomme comprend un ramollissant.
